# EUROPÄISCHE PATENTSCHRIFT

(11) **EP 1 949 826 B1**
(45) Veröffentlichungstag und Bekanntmachung des Hinweises auf die Patenterteilung: **18.11.2009**
(21) Anmeldenummer: 07001476.6
(22) Anmeldetag: 24.01.2007
(51) Int. Cl.: A47J 31/06

(54) **Maschine mit automatisch abgedichteter Brühkammer**
Machine with automatically sealed brew chamber
Machine dotée d'une chambre de macération automatique

(43) Veröffentlichungstag der Anmeldung: 30.07.2008
(73) Patentinhaber: WMF WÜRTTEMBERGISCHE METALLWARENFABRIK AG, 73309 Geislingen/Steige (DE)
(72) Erfinder: Startz, Armin, 89197 Weidenstetten (DE)
(74) Vertreter: Grünecker, Kinkeldey, Stockmair & Schwanhäusser Anwaltssozietät

(56) Entgegenhaltungen:
- EP-A- 1 092 376
- EP-A- 1 582 127
- WO-A-2005/099534
- DE-U1-202004 020 991
- US-A1- 2005 034 605

## Beschreibung

Die Erfindung betrifft eine Maschine zur Zubereitung eines Heißgetränks gemäß dem Oberbegriff des Anspruchs 1.

Eine solche Maschine ist bereits aus der EP-A-1092376 bekannt. Hier wird bereits ein Kapselhalter für Kaffee beschrieben, der ein Oberteil aufweist, das zu einem Kapselhalterunterteil eine dichte Verbindung herstellen kann. Das dichtende Oberteil kann ebenso zu einem Boilerteil eine dichtende Verbindung herstellen, In der Oberfläche des dichtenden Oberteils ist ein Filter angeordnet.

Solche Maschinen, insbesondere Kaffeemaschinen, bei denen unter Druck Brühwasser über das Brühmedium, z. B. Kaffeemehl geleitet wird, sind bereits aus dem Stand der Technik bekannt.

Solche Kaffeemaschinen weisen eine Brühkammer auf, die während der Brühung gegen die Umgebung abgedichtet ist. Die Brühkammer ist dabei in der Regel zweiteilig ausgeführt, bei der mindestens ein Teil beweglich an der Maschine angeordnet ist. In der W02005/072572 ist z. B. eine Schublade beschrieben, die das Brühkammerunterteil darstellt. Das Brühkammeroberteil ist an der Maschine befestigt. In der EP090471A1 ist eine weitere Ausführungsmöglichkeit einer solchen Brühkammer beschrieben. Dabei ist das Brühkammeroberteil schwenkbar gelagert.

Bei allen Maschinen muss dabei das Brühwasser unter Druck der Brühkammer zugeführt werden. Dazu muss auch die Verbindung zwischen Brühwasserleitung und Brühkammer gegen die Umgebung abgedichtet sein.

Durch diese notwendige Anbindung des Brühkammeroberteils an die Maschine kann das Brühkammeroberteil nicht vom Gerät getrennt werden, oder kann nur mit komplizierten und aufwändigen Verbindungsmechanismen mit dem Gerät verbunden werden.

Hiervon ausgehend liegt der vorliegenden Erfindung die Aufgabe zugrunde eine Maschine zur Zubereitung eines Heißgetränks bereit zu stellen, die auf einfache und kostengünstige Weise ermöglicht, dass das einströmende Brühwasser an der Verbindungsstelle zwischen Gehäuse und Brühkammer gegen die Umgebung abgedichtet wird, ohne dass aufwendige Verschlussmechanismen notwendig sind.

Erfindungsgemäß wird diese Aufgabe durch die Merkmale des Anspruchs 1 gelöst.

Die vorliegende Erfindung ermöglicht eine zuverlässige Dichtung zwischen dem Anschlussbereich, durch den Brühwasser zu dem Brühkammeroberteil geleitet wird, und dem Brühkammeroberteil, ohne dass zusätzliche bewegte Teile notwendig sind, so dass bereits durch das Einsetzen der Brühkammer in die Maschine ( d. h. z. B. durch das Einschieben) der Anschlussbereich und die Dichtung aneinander gepresst werden können. So kann auf aufwändige Verschlussmechanismen verzichtet werden. Somit sind keine Exzenter, gehäuseseitigen Stößel etc. notwendig. Dies wirkt sich positiv auf die Herstellungskosten sowie auf die Bedienung und das Maschinendesign aus. Da gemäß der vorliegenden Erfindung zur Abdichtung keine zusätzlichen Bewegten Teile erforderlich sind, kommt es auch zu keinem Verschleiß durch Bewegung. Da die Dichtung in dem Brühkammeroberteil eingesetzt ist, kann beispielsweise die gesamte Brühkammer inklusive Dichtsystem einfach entnommen und gereinigt und ggf. ersetzt werden.

Es ist vorteilhaft, wenn die Dichtung aus elastischem Material gebildet ist, wobei die Dichtung in eingebautem Zustand automatisch durch den Anschlussbereich komprimiert wird. Dabei kann der mittlere Bereich der Dichtung, der komprimiert wird, zumindest teilweise auf einer Auflage des Brühkammerteils auflegen. Diese Komprimierung reicht aus, um die Brühkammer gegen das Gehäuse derart abzudichten, dass sich beim Einleiten von Brühwasser über das Brühmedium, beispielsweise das Kaffee-Pad, ein leichter Innendruck in der Brühkammer aufbauen kann.

Während des Brühens erhöht sich jedoch der Innendruck in der Brühkammer. Es ist vorteilhaft, wenn die Geometrie der Dichtung derart gestaltet ist, dass die Dichtung bei erhöhtem Innendruck in der Brühkammer gegen den Anschlussbereich gedrückt wird. Dadurch wird abhängig vom herrschenden Innendruck der Brühkammer die Dichtung derart gegen de Anschlussbereich gedrückt, dass sich ein Kräfteverhältnis einstellt, welches das einströmende Brühwasser stets gegen die Umgebung abdichtet.

Dazu kann die Dichtung beispielsweise einen um den mittleren Bereich angeordneten äußeren Bereich aufweisen, der von der Innenseite des Brühkammeroberteils beabstandet ist und durch einen erhöhten Druck in der Brühkammer gegen die Innenseite drücken kann.
Der äußere Bereich überträgt somit den erhöhten Druck in der Brühkammer auf den mittleren Bereich der Dichtung, der somit noch stärker gegen den Anschlussbereich gedrückt wird.

Es ist vorteilhaft, wenn die Dichtung derart ausgebildet ist, dass sie sich im wesentlichen über die gesamte obere Fläche der Innenseite des Brühkammeroberteils, zumindest aber über etwa 25% der oberen Fläche der Innenseite erstreckt. Dies ermöglicht eine ideale Übertragung des Innendrucks auf die Dichtung.

Gemäß der vorliegenden Erfindung weist die Dichtung einen Endbereich auf, der das Brühkammeroberteil mit dem Brühkammerunterteil abdichtet. Somit kann die Dichtung für die Brühwasserzuleitung gleichzeitig zum Abdichten des Brühkammeroberteils und -unterteils verwendet werden, was die Anordnung vereinfacht und kostengünstig macht. Vorteilhafter weise ist die Dichtung einstückig ausgebildet.

Gemäß einer bevorzugten Ausführungsform weist die Brühkammer im zusammengesetzten, verschlossenen Zustand einen Aufnahmebereich auf, dessen Form und Größe derart ausgebildet ist, dass beispielsweise ein Pad (Kaffee-Pad, Tee-Pad, etc.) mit vorgegebener Normgröße aufnehmbar ist. Dann kann die Dichtung derart ausgebildet sein, dass sie einen umlaufenden Kragen aufweist, der von oben und von der Seite in das Pad drückt, um dieses zu halten und eine gleichmäßige Verteilung des Brühwassers in dem Pad zu ermöglichen.

Gemäß einer bevorzugten Ausführungsform weist das Gehäuse ein Einschubfach auf, in das die geschlossene Brühkammer als ganzes einschiebbar ist. Eine solche Ausführungsform ist besonders vorteilhaft, da die Brühkammer geschlossen als Ganzes entnommen werden kann und außerhalb der Maschine geöffnet werden kann. Das Einschieben der Brühkammer erlaubt ein einfaches Austauschen der Brühkammer im Gehäuse. Somit kann durch einfaches Einschieben der Brühkammer in die Maschine die Verbindungsstelle zwischen Anschlussbereich und Brühkammeroberteil gegen die Umgebung abgedichtet werden.

Dabei sind der Anschlussbereich, der in dem Einschubfach angeordnet ist, und die Oberseite des Brühkammeroberteils derart ausgebildet sein, dass der mittlere Dichtungsbereich beim Einschieben in das Einschubfach, auf den Anschlussbereich aufläuft. Gemäß einer bevorzugten Ausführungsform kann der Anschlussbereich in das Einschubfach hineinragen. Damit der mittlere Dichtungsbereich gut auflaufen kann, kann die Oberseite des Brühkammeroberteils eine Vertiefung aufweisen, die zumindest von dem mittleren Bereich der Dichtung nach außen in Einschubrichtung der Brühkammer verläuft. Somit kann, wenn die Brühkammer in das Einschubfach eingeschoben wird, der Anschlussbereich, der in das Einschubfach hineinragt in der Vertiefung geführt werden, bis er auf die Dichtung aufläuft. Zum einfacheren Einführen der Brühkammer kann auch die Höhe der Brühkammer von der Einschubseite der Brühkammer zum mittleren Bereich der Dichtung hin zunehmen. Somit kann die Brühkammer auf einfache Art und Weise eingeführt werden, ohne dass der Anschlussbereich den Einschubvorgang behindert.

Gemäß einer bevorzugten Ausführungsform der vorliegenden Erfindung übernimmt die Dichtung noch die zusätzliche Aufgabe, das Brühwasser im Brühkammeroberteil sternförmig zu verteilen. Der mittlere Bereich der Dichtung weist einen Leitungsabschnitt für das Brühwasser auf, über dem Brühwasser nach unten zum Brühmedium und/oder über Kanäle sternförmig nach außen verteilt wird.

Gemäß einer bevorzugten Ausführungsform weist die Dichtung in uneingesetztem Zustand eine konvexe Form auf und hat auf ihrer Unterseite von dem Leitungsabschnitt sternförmig nach außen verlaufende Nuten, die sich zu Kanälen schließen, wenn die Dichtung plan in dem Brühkammeroberteil eingebaut ist. Dieser Aufbau ermöglicht eine besonders kostengünstige Fertigung der Brühkammer. Der wesentliche Vorteil liegt darin, dass keine zusätzlichen Komponenten für die Verteilungskanäle notwendig sind. Ein weiterer Vorteil liegt darin, dass die Dichtung, die ja aus der Brühkammer entnehmbar und wieder einsetzbar ist, gründlich gereinigt werden kann, wobei dann auch die Kanäle durch Biegen der Dichtung geöffnet und somit gereinigt werden können. Somit kommt es zu keiner Verschmutzung oder Verkalkung in den Kanälen.

Der Anschlussbereich der Maschine kann entweder direkt am Gehäuse angeformt sein, d. h. als entsprechender Anschlussnippel am Gehäuse befestigt sein, oder aber als getrenntes Element in das Gehäuse eingefügt sein. Wenn der Anschlussbereich als separates Element in das Gehäuse eingefügt ist, besteht die Möglichkeit beispielsweise ein entsprechendes elastischeres Material zu wählen.

Die vorliegende Erfindung wird nachfolgend unter Bezugnahme der folgenden Zeichnungen näher erläutert.

Figur 1 zeigt schematisch eine perspektivische Darstellung einer Maschine gemäß der vorliegenden Erfindung mit eingeschobener Brühkammer.

Figur 2 zeigt schematisch in perspektivischer Darstellung die in Figur 1 gezeigte Maschine mit entnommener Brühkammer.

Figur 3 zeigt schematisch einen Schnitt durch eine Ausführungsform einer Brühkammer mit Dichtung gemäß der vorliegenden Erfindung, die in das Gehäuse eingeschoben ist.

Figur 4 zeigt einen Schnitt durch eine andere Ausführungsform einer Brühkammer mit eingesetzter Dichtung.

Figur 5 zeigt eine Explosionsdarstellung der erfindungsgemäßen Brühkammer.

Figur 6 zeigt eine perspektivische Ansicht der Unterseite des Brühkammeroberteils.

Figur 7a zeigt eine Aufsicht auf das Brühkammeroberteil.

Figur 7b zeigt einen Schnitt entlang der Linie A-A der Figur 7a.

Figur 8a zeigt eine Aufsicht auf die Unterseite der Dichtung.

Figur 8b zeigt einen Schnitt entlang der Linie B-B in der Figur 8a.

Figur 8c zeigt einen Schnitt entlang der Linie C-C in Figur 8a.

Figur 9a zeigt in perspektivischer Darstellung die Oberseite der Dichtung gemäß der vorliegenden Erfindung.

Figur 9b zeigt die Unterseite der Dichtung gemäß der vorliegenden Erfindung.

Figur 10 zeigt einen Schnitt durch das Einschubfach, wobei der Anschlussbereich an das Gehäuse angeformt ist.

Nachfolgend wird die vorliegende Erfindung in Zusammenhang mit einer Ein-Tassen-Maschine zur Zubereitung eines Heißgetränkes beschrieben. Insbesondere wird die vorliegende Erfindung in Zusammenhang mit einer zweiteiligen Brühkammer 3 beschrieben, die komplett als Ganzes aus dem Gehäuse entnehmbar ist und in das Gehäuse einschiebbar ist. Die vorliegende Erfindung ist insbesondere für derartige Maschinen von Vorteil, da es zu einem häufigen Wechsel des Brühkammermediums in der Brühkammer kommt und diese oft und einfach entnommen und gereinigt werden muss. Die vorliegende Erfindung ist jedoch auch für Mehr-Tassen-Systeme geeignet, sowie für Systeme, bei denen zumindest das Brühkammeroberteil aus dem Gehäuse bewegt wird.

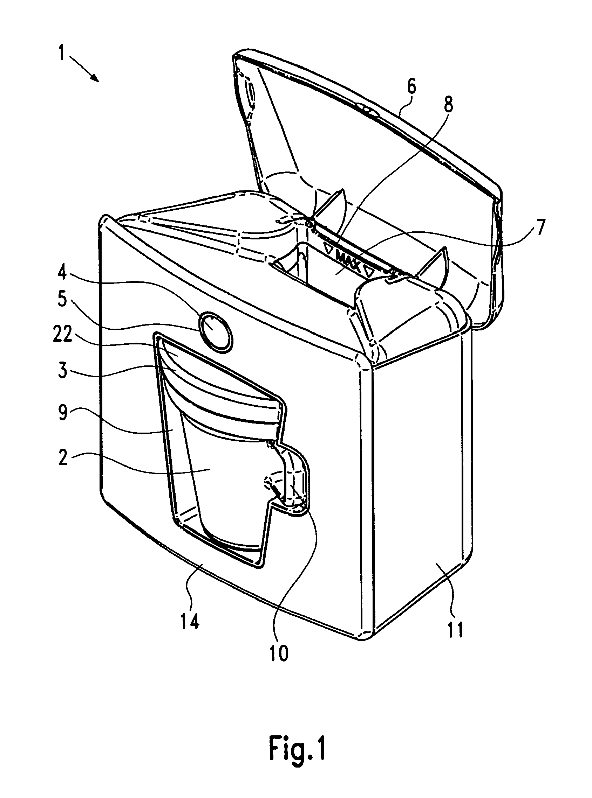

Figur 1 zeigt in perspektivischer Darstellung eine mögliche Ausführungsform einer Maschine 1 zur Zubereitung eines Heißgetränks gemäß der vorliegenden Erfindung. Eine solche Maschine 1 kann beispielsweise Kaffee oder Tee etc. zubereiten. Die Maschine 1 weist dabei ein Gehäuse 11 auf, das an seiner Oberseite einen Deckel aufweist, mit dem das Gehäuse 11 geöffnet und verschlossen werden kann. In dem Gehäuse befindet sich ein Wassertank 7 mit einer Füllstandsmarkierung 8, bis zu welcher Wasser für das Heißgetränk eingefüllt werden kann. Die Größe bzw. das Fassungsvolumen des Wassertanks 7 ist derart ausgelegt, dass er nur die Wassermenge aufnehmen kann, die zur Erzeugung einer Tasse an Heißgetränk benötigt wird. Das vorbestimmte Volumen liegt dabei in einem Bereich von etwa 100 bis 200 ml je nach Tassengröße. Durch das kleine Wassertankvolumen ist am Ende der Brühung der Tank leer. Somit können keine Verunreinigungen durch lange Wasseraufbewahrung im Tank auftreten. Weiter weist die Maschine 1 ein nicht dargestelltes Heizsystem auf, das das Wasser aus dem Wassertank 7 erhitzt. Dabei können Boilersysteme oder Thermoblockheizungen verwendet werden. Das Heizsystem ist so dimensioniert, dass es ausreicht, um eine Wassermenge für nur eine Tasse Heißgetränk zu erhitzen. Die Maschine 1 besitzt also nur eine Brühmenge, auf die die Größe und Leistung des Heizsystems 12 ausgelegt ist. Es wird also nur die Menge an Energie zugeführt, die zum Bereitstellen einer Tasse Brühwasser benötigt wird. Weiter weist die Maschine einen Bereich 9 auf, zur Aufnahme einer Tasse 2, in die das Heißgetränk abgefüllt wird.

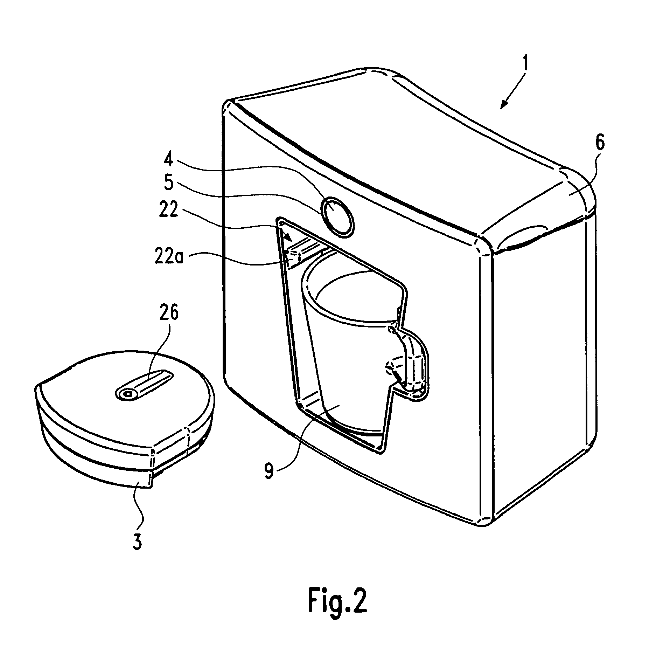

Die Größe des Bereichs 9 ist derart ausgelegt, dass eine Tasse 2 darin Platz findet. Im oberen Bereich 9 befindet sich die Einschubkammer 22, in die die Brühkammer 3, wie aus Figur 1 hervorgeht, eingeschoben ist, während sie in Figur 2 komplett als Ganzes entnommen ist. Bei eingesetzter Brühkammer 3 ergibt sich ein Holraum dessen Längsschnitt ( parallel zur Vorderseite 14 des Gehäuses 11) eine Form aufweist, die angepasst, d. h. komplementär zur Form der darin stehenden Tasse ist. Damit auch Tassen mit Henkel verwendet werden können, weist die Kammer 9 auf zumindest einer Seite einen Bereich auf, der sich von einer Seitenwand des Kammerbereichs seitlich nach außen erstreckt, um beispielsweise einen Henkel 10 der Tasse 2 aufzunehmen. Diese Ausbildung ermöglicht eine sehr platzsparende Anordnung des Bereichs zur Aufnahme der Tasse, so dass insgesamt Platz gespart werden kann.

Weiter weist die Maschine nur eine Taste 4 für den kompletten Betrieb auf. Die Taste 4, die hier als Drucktaste ausgebildet ist, weist eine Leuchtanzeige 5, hier in Form eines Leuchtrings 5 auf, der die wesentlichen Betriebszustände anzeigt. Die Maschine 1 weist eine nicht dargestellte Steuereinheit auf, die das Heizsystem, eine Pumpe sowie die Leuchtanzeige ansteuert.

Gemäß dieser Ausführungsform der vorliegenden Erfindung ist die Brühkammer 3 nicht an dem Gehäuse 11 befestigt, sondern kann komplett entnommen werden. Figur 1 zeigt die Maschine mit vollständig eingeschobener Brühkammer 3. Figur 2 zeigt die Maschine mit entnommener Brühkammer 3. Vollständig bzw. komplett entnehmbar bedeutet hier, dass beide Teile, hier also sowohl Oberteil 3b als auch Unterteil 3a in zusammengefügtem Zustand gleichzeitig aus der Maschine entnommen werden können. In die Brühkammer 3 können unterschiedliche Brühmedien in unterschiedlicher Form, wie beispielsweise Kaffeepulver oder Kaffee-Pads, Kapseln bzw. Kaffee/Tee-Pulver etc. gefüllt werden.

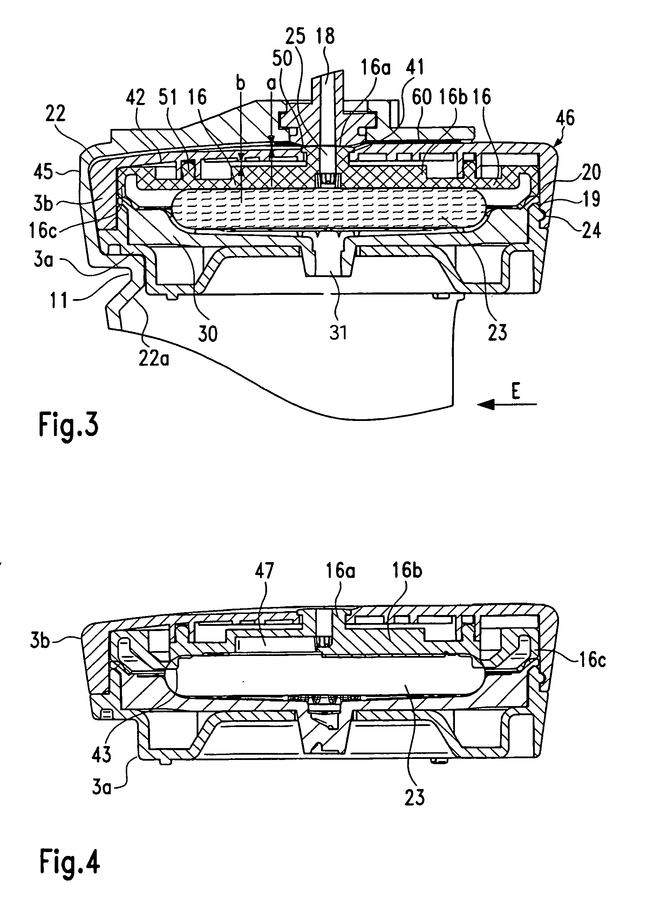

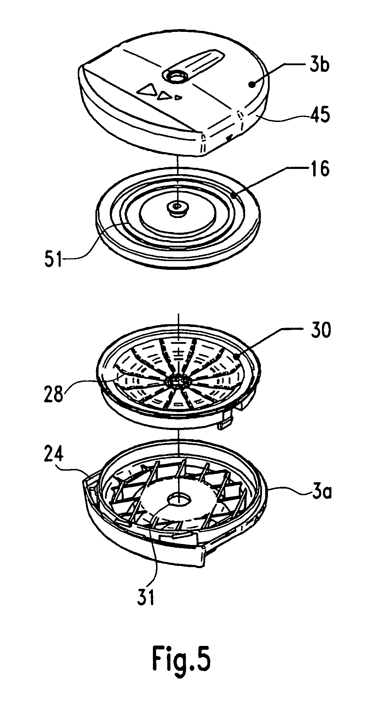

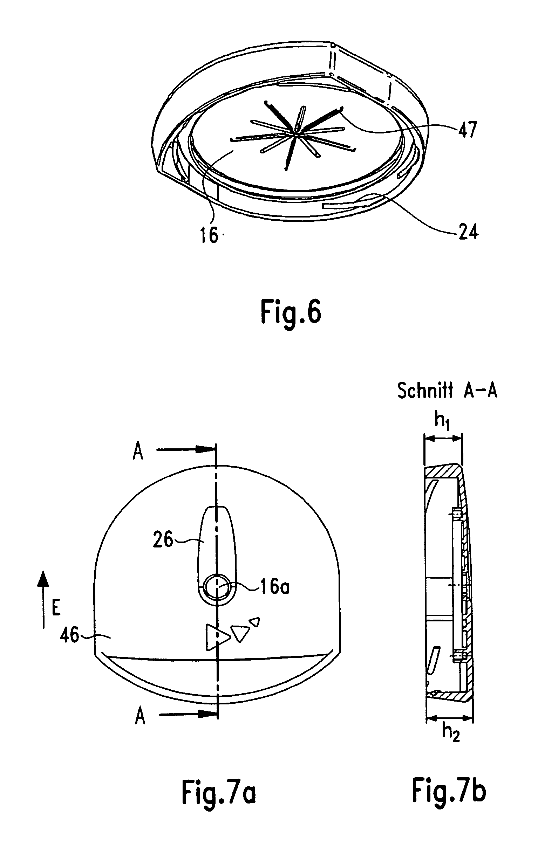

Wie insbesondere aus den Figuren 5 und 6 hervorgeht, umfasst die Brühkammer 3 hier das Oberteil 3b und das Unterteil 3a, die über einen Verschließmechanismus 24 festverbindbar sind. Ein solcher Verschließmechanismus 24 kann beispielsweise durch Gewindenocken 24 (siehe Figur 6) oder aber auch durch einen Schraubverschluss oder Bayonettverschluss realisiert sein. Solche Verschlussmechanismen sind außerordentlich verschleißarm. Die beiden Brühkammerteile 3a, 3b weisen jeweils einen entsprechenden oberen 16 sowie unteren 30 Einsatz auf. Der untere Einsatz 30 wird in das Unterteil 3a eingesetzt und weist sich radial erstreckende Stege 28 auf, die zu einem Auslass 31 der Brühkammer 3 führen und die den Ablauf des gebrühten Mediums zum Auslauf 31 hin begünstigen. Der obere Einsatz 16 weist unterschiedliche Funktionen auf, und ist als Dichtung ausgebildet. Figur 3 zeigt eine mögliche Ausführungsform der Brühkammer im zusammengesetzten Zustand, die in das Einschubfach 22 eingeschoben ist. Der Pfeil E in Figur 3 zeigt die Einschubrichtung. Die Oberseite 46 des Brühkammeroberteils 3b weist, hier im wesentlichen in der Mitte der Brühkammer, eine Öffnung 50 auf. In Figur 3 ist deutlich die Dichtung 16 zu erkennen, die hier in dem Brühkammeroberteil 3b eingesetzt ist. Die Dichtung 16 ist in dieser Ausführungsform aus einem elastischen Material, vorzugsweise aus Silikon gebildet, die eine Shorehärte in einem Bereich von 30-60 shore, vorzugsweise 50 shore, aufweist. Ebenso wie das Material für die Brühkammer muss auch die Dichtung, da sie in unmittelbarem Kontakt mit dem Brühmedium bzw. Brühwasser steht, lebensmitteltauglich und temperaturbeständig bis mindestens 95°C sein. Die Dichtung 16 ist einstückig ausgebildet. Sie weist einen mittleren Bereich 16a auf, der sich durch die Öffnung 50 im Brühkammeroberteil zur Oberseite 46 des Brühkammeroberteils 3b erstreckt und hier einen umlaufenden Kragen aufweist. Durch den mittleren Bereich 16a der Dichtung erstreckt sich der Leitungsabschnitt 25, durch den Brühwasser von dem Anschlussbereich 40 geleitet wird. Im Anschlussbereich 40 ist die Brühwasserleitung 18 vorgesehen. Der mittlere Bereich 16a der Dichtung steht bei dieser Ausführungsform dabei zumindest teilweise (in Figur 3 auf der linken Seite) etwas über die angrenzende Oberseite des Oberteils 3b über, so dass der mittlere Bereich 16a um das Maß a komprimierbar ist. Die Einschubleiste 22a des Gehäuses 11 ist so bemessen, dass beim Einschieben der Brühkammer 3 in das Einschubfach 22, die Brühkammer 3 eine genaue Lage in dem Gehäuse 11 erfährt und der Leitungsabschnitt 25 in der Dichtung 16a exakt zu dem Anschlussbereich 40 und insbesondere der Brühwasserzuleitung 18 ausgerichtet ist. So kann Brühwasser, das mit Hilfe einer Pumpe aus dem Wassertank 7 gepumpt wurde und von dem Heizsystem erhitzt wurde, über den Anschlussbereich 40 unter hohem Druck in die Brühkammer 3 eingebracht werden. Dabei müssen Brühkammeroberteil und Brühkammerunterteil druckdicht miteinander verbunden sein, wie später noch näher erläutert wird.

Gemäß der vorliegenden Erfindung wird durch Einsetzen, hier durch Einschieben der Brühkammer 3 in das Einschubfach 22 der Maschine 1 die Dichtung 16, d. h. der mittlere Bereich 16a der Dichtung und der Anschlussbereich 40 automatisch derart aneinandergepresst, dass die Verbindungsstelle zwischen Anschlussbereich 40 und Oberteil 3b, gegen die Umgebung abgedichtet ist. Da hier die Dichtung 16 aus elastischem Material gebildet ist, wird sie von dem Anschlussbereich 40, der in die Kammer 22 vorsteht, etwas komprimiert (Maß a). Damit dies möglich ist, liegt dabei ein Teil des mittleren Bereichs 16a, hier der Kragen, auf einer Auflage 41 des Brühkammeroberteils 3b auf. Außerdem liegt die gesamte Brühkammer auf der Einschubschiene 22a auf.

Diese Komprimierung reicht aus, um die Brühkammer gegen das Gehäuse 11 derart abzudichten, dass sich beim Einleiten von Brühwasser über das Brühmedium 23 ein leichter Innendruck in der Brühkammer aufbauen kann.

Damit beim Einschieben der Brühkammer in das Einschubfach 22 der mittlere Bereich 16a gegen die untere Fläche des Anschlussbereichs 40 auflaufen kann, so dass der mittlere Bereich 16a automatisch niedergedrückt wird und sich somit automatisch ein relativ dichter Sitz ergibt, weist der Anschlussbereich 40 eine nach oben verlaufende Phase auf. Auch der Kragen des mittleren Bereichs 16a der Dichtung kann nach unten angephast sein.

Damit die Brühkammer 3 einfach in das Einschubfach 22 einschiebbar ist, kann beispielsweise die Höhe der Brühkammer 3 von der Einschubseite der Brühkammer 3 zum mittleren Bereich der Dichtung 16a hin zunehmen, wie aus Figur 3 sowie Figur 7b deutlich wird. Figur 7b zeigt, dass die Höhe h1, die auf der Seite liegt, die beim Einschieben der Brühkammer 3 dem Gehäuse 11 gegenüber liegt, kleiner ist, als die Höhe h2 auf der gegenüber liegenden Seite. Zum besseren Einführen kann die Oberseite 46 des Brühkammeroberteils auch eine Vertiefung 26 aufweisen, die zumindest von dem mittleren Bereich 16a der Dichtung nach außen in Einschubrichtung der Brühkammer 3 verläuft. Die Höhe der Vertiefung nimmt entgegen der Einschubrichtung etwas zu, wie aus Figur 7b zu erkennen ist. Die oben gezeigte Anordnung ermöglicht ein einfaches Einschieben der Brühkammer, wobei gleichzeitig die Brühkammer auf der unteren Schiene 22a aufliegt und es auch auf der der Einschubseite gegenüberliegenden Seite der Brühkammer zu einer formschlüssigen Verbindung 60 zwischen Brühkammer und Gehäuse kommt.

Die oben erläuterte Kompression des mittleren Dichtungsbereichs 16a erlaubt somit, dass die Brühkammer gegen das Gehäuse ausreichend abgedichtet ist, wenn sich ein leichter Innendruck in der Brühkammer 3 aufbaut.

Die flächige Geometrie der Dichtung in der Brühkammer erlaubt es, dass die Dichtung 16 durch den Innendruck weiter gegen den Anschlussbereich 40 gedrückt werden kann (Maß b). Dazu weist die Dichtung 16 einen um den mittleren Bereich 16a angeordneten Bereich 16b auf, der von der Innenseite 42 des Brühkammeroberteils 3b um das Maß b beabstandet ist, und durch einen erhöhten Druck in der Brühkammer in Richtung zur oder gegen die Innenseite 42 des Brühkammeroberteils 3b drückt. Somit wird der erhöhte Druck in der Brühkammer auf die Dichtung 16 übertragen, wobei weiter der mittlere Bereich 16a gegen den Anschlussbereich 40 gedrückt wird, was die Dichtleistung erhöht. Somit wird abhängig vom herrschenden Innendruck der Brühkammer die Dichtung derart gegen den Anschlussbereich gedrückt, dass sich ein Kräfteverhältnis einstellt, welches das einströmende Brühwasser stets gegen die Umgebung abdichtet.

Die flächig ausgebildete Dichtung 16 ist dabei derart ausgebildet, dass sie sich im wesentlichen über die gesamte obere Fläche der Innenseite 42 des Brühkammeroberteils 3b zumindest aber über 25% der oberen Fläche der Innenseite erstreckt, damit der Druck in der Innenkammer ausreichend auf die Dichtung und somit auf den Anschlussbereich 40 übertragen werden kann.

In dieser Ausführungsform ist die Dichtung einstückig ausgeführt und übernimmt zusätzlich noch die Aufgabe das Brühkammeroberteil 3b mit dem Brühkammerunterteil 3a abzudichten.

Der Ausdruck, dass der Bereich 16b um den mittleren Bereich 16a angeordnet ist, soll nicht bedeuten, dass der äußere Bereich 16b, der von der Innenseite 42 beabstandet ist, direkt an den mittleren Bereich 16a, der sich durch die Öffnung 50 erstreckt, angrenzt, wie dies in den Figuren der Fall ist. Es ist auch möglich, dass der äußere Bereich zunächst an die Innenseite 42 angrenzt und sich in Radialrichtung erst danach ein Abstand zur Innenseite 42 ergibt.

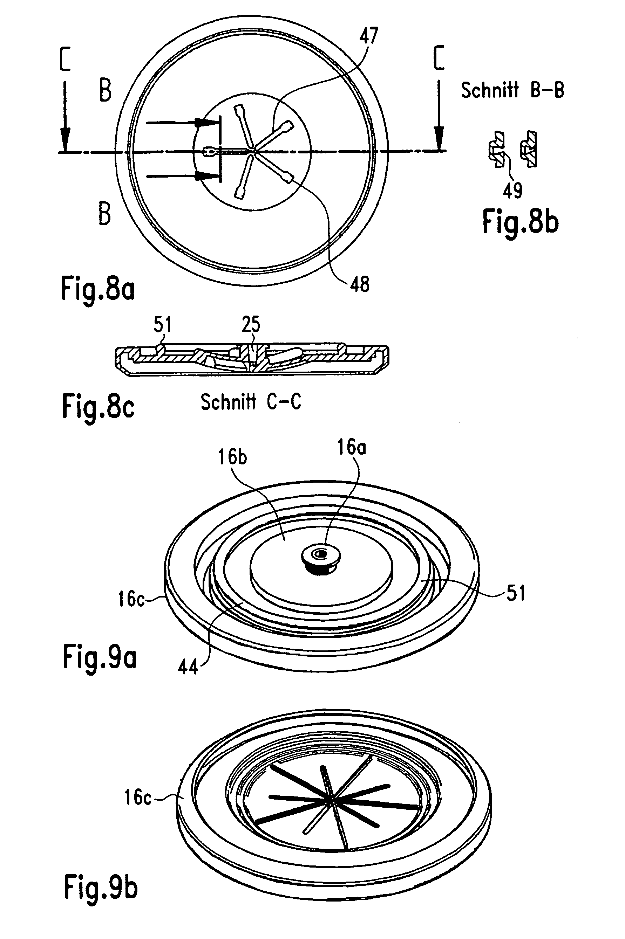

Wie insbesondere aus den Figuren 3 und 9 hervorgeht, ist die Dichtung 16 einstückig ausgeführt und kann zusätzlich zu der oben ausgeführten Abdichtung zwischen Anschlussbereich 40 und Brühkammeroberteil 3a noch die Aufgabe übernehmen, das Brühkammeroberteil mit dem Brühkammerunterteil abzudichten. Wie insbesondere aus den Figuren 3 und 9 hervorgeht, ist dazu noch ein Endbereich 16c vorgesehen, der sich bis in den Bereich der Innenfläche der Seitenwände 45 des Brühkammeroberteils 3a erstreckt. Der Endbereich 16c ist hier derart ausgebildet, dass er an den unteren Einsatz 30 des Brühkammerunterteils 3a anliegt, wodurch der Fügespalt 19 zwischen Brühkammeroberteil und -unterteil abgedichtet wird. Da die Dichtung 16 auch diese Dichtfunktion übernimmt, kann auf eine extra Dichtung, wie etwa einen extra Dichtring, verzichtet werden. Bei steigendem Innendruck wird die Dichtung 16 in zunehmendem Maße gegen das Brühkammerunterteil bzw. den entsprechenden Einsatz 30 gedrückt, so dass mit zunehmendem Druck die Abdichtung zunimmt.

Der auftretende Brühdruck bringt axiale Kräfte auf die Brühkammerteile 3a, b mit sich. Ein Aufdrücken der Brühkammer kann verhindert werden durch
a) formschlüssiges Verbinden der Brühkammerteile 3a,b mit dem Gehäuse 11. Dabei sind die Abmessungen des Einschubfaches 22 und der Brühkammer 3b derart ausgebildet, dass die Oberfläche des Oberteils 3b und die Unterseite des Unterteils 3a zumindest teilweise an dem Einschubfach 22 anliegend. Somit kann die axial wirkende Kraft von dem Gehäuse 11 aufgenommen werden, wodurch die Brühkammer nicht aufgedrückt wird, und
b) die Brühkammerteile 3a, b werden wie zuvor beschrieben, außerhalb der Maschine über den Verschlussmechanismus 24 fest verschlossen. Diese Verriegelung nimmt dann die entstehenden Axialkräfte auf. Eine Kombination der Maßnahmen a und b ist besonders wirksam, insbesondere in Kombination mit Dichtungsabschnitt 16c.

Vorteilhafter Weise wird die Abmessung des Einschubfachs 22 auch derart bemessen, dass die Brühkammer 3 seitlich an dem Einschubfach teilweise anliegt. Somit sind die Brühkammerteile 3a, b nach dem Einschieben in dem Einschubfach 22 auch in Radialrichtung miteinander fixiert. Radiale Brühkräfte werden dann direkt von dem Brühkammerteilen 3a, b und dem angrenzenden Gehäuse 11 aufgenommen.

Wie insbesondere aus Figuren 3 und 9 hervorgeht, weist die Dichtung 16 einen Vorsprung 51, hier einen ringförmigen Vorsprung 51 auf, der in eine entsprechende Nut in dem Brühkammeroberteil 3b auf einfache Weise gedrückt werden kann, so dass die Dichtung 16 in dem Brühkammeroberteil 3b fixiert werden kann, jedoch gleichzeitig zu Reinigungszwecken auf einfache Art und Weise wieder entnommen werden kann.

Neben der Funktion den Anschlussbereich 40, der das Brühwasser zu dem Brühkammeroberteil 3a führt, gegen das Brühkammeroberteil abzudichten und ggf. noch die beiden Brühkammerhälften abzudichten, kann die Dichtung 16 noch eine weitere Funktion übernehmen, nämlich die, das Brühwasser sternförmig im Brühkammeroberteil zu verteilen. Wie deutlich aus Figur 3 hervorgeht, umfasst der mittlere Bereich 16a der Dichtung den Leitungsabschnitt 25 für das Brühwasser, über dem Brühwasser nach unten und/oder über Kanäle 47 sternförmig nach außen verteilt wird. Die Kanäle 47 befinden sich an der Unterseite der Dichtung 16, wie insbesondere aus Figur 8a hervorgeht und stehen an ihrer inneren Seite mit den Leitungsabschnitt 25 in Verbindung. Die Kanäle 47 weisen an ihren anderen Enden Öffnungen 48 auf, durch die das Wasser austreten kann. Wie insbesondere aus Figur 8 hervorgeht, wird zur Erzeugung der Kanäle 47 die Dichtung bei ihrer Formgebung in einer konvexen Form erzeugt. Dabei ist zumindest der innere Bereich, das bedeutet, der Abschnitt, in dem die Kanäle 47 verlaufen sollen, konvex ausgebildet. In diesem konvexen Bereich sind Nuten 49 vorgesehen, die nach unten geöffnet sind. Die Nuten sind hier so ausgebildet, dass die Breite an der Oberseite geringer ist, als die Breite an der Unterseite. D. h., dass die Nuten dabei im wesentlichen V-förmig dimensioniert werden. Wird nun die Dichtung 16 in das Brühkammeroberteil 3a plan montiert, so schließen sich die Nuten, wie in Figur 8b gezeigt ist, zu Kanälen 47, die einen im wesentlichen dreieckförmigen Querschnitt aufweisen.

Somit können auf einfache Art und Weise Brühwasserkanäle gefertigt werden, ohne dass zusätzliche Komponenten oder ein aufwendiges Herstellungsverfahren notwendig sind. Eine solche Ausgestaltung der Kanäle 47 bringt auch den Vorteil mit sich, dass bei Reinigung der Brühkammer die Dichtung entnommen werden kann, wobei zur Reinigung durch einfaches Umstülpen der Dichtung 16 die Kanäle geöffnet werden können und somit auch gereinigt werden können.

Die Figur 4 zeigt ein weiteres Ausführungsbeispiel der vorliegenden Erfindung, die im wesentlichen dem in Figur 3 gezeigten Ausführungsbeispiel entspricht, mit Ausnahme eines zusätzlich ausgebildeten umlaufenden Kragens 43. Die Brühkammer 3 weist wie aus Figur 4 hervorgeht im zusammengesetzten, verschlossenen Zustand einen Aufnahmebereich für Brühmedium 23 auf. Der Aufnahmebereich für das Brühmedium 23 hat hier beispielsweise die Form und die Größe, dass ein Pad, beispielsweise für Kaffee oder Tee mit vorgegebener Normgröße aufnehmbar ist. Der umlaufende Kragen 43 ragt so weit in den Aufnahmebereich hinein, dass er das Pad an seinem seitlichen Umfang und von oben eindrückt. Somit wird das Pad gehalten und die gleichmäßige Verteilung des Wassers begünstigt.

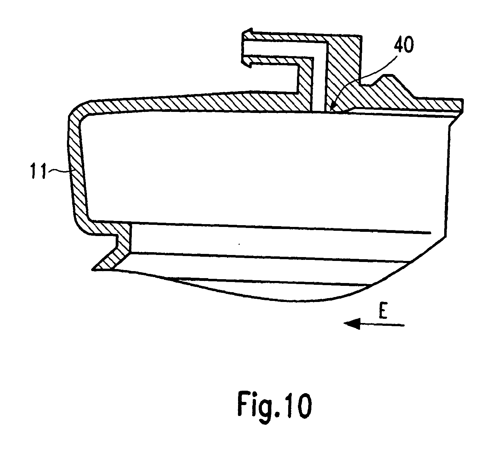

In der Figur 3 war der Anschlussbereich 40 als separates Element in das Gehäuse 11 eingefügt. Somit kann der Anschlussbereich 40 ggf. auch aus einem Material gefertigt werden, dass sich von dem Gehäusematerial unterscheidet. Es ist jedoch auch möglich, wie in Figur 10 gezeigt ist, dass der Anschlussnippel für das Brühwasser direkt im Gehäuse angeformt ist.

Gemäß der vorliegenden Erfindung sind zum Abdichten des Anschlussbereichs 40 im Brühkammeroberteil keine zusätzlichen bewegten Teile notwendig, was das System außerordentlich wirtschaftlich macht. Da an der Maschine keine bewegten Teile angeordnet sind, ergibt sich kein Verschleiß durch Bewegung. Die gesamte Brühkammer inklusive Dichtsystem kann einfach entnommen und gereinigt und ggf. ersetzt werden. Die Dichtung 16 kann dabei in geschickter Weise unterschiedliche Funktionen übernehmen, wie Abdichten des Anschlussbereichs 40 und der Brühkammer 3 bei niedrigem und hohem Druck in der Brühkammer, Abdichten der beiden Brühkammerhälften, sowie sternförmige Verteilung des Brühwassers. Insbesondere für Ein-Tassen-Systeme ist dieses Dichtsystem besonders geeignet, da hier jeweils nach einer Tasse die Brühkammer entnommen, entleert, gereinigt, gefüllt und wieder eingesetzt wird.

## Patentansprüche

1. Maschine (1) zur Zubereitung eines Heißgetränks mit einem Gehäuse (11) sowie einer Brühkammer (3), die komplett als Ganzes aus dem Gehäuse entnehmbar ist,
wobei das Gehäuse (11) mit einem Anschlussbereich (40) versehen ist, durch den Brühwasser zu dem Brühkammeroberteil (3b) geleitet wird,
**dadurch gekennzeichnet, dass**
im Brühkammeroberteil (3b) eine Dichtung (16) eingesetzt ist, die einen mittleren Bereich (16a) aufweist, der sich durch eine Öffnung (50) im Brühkammeroberteil (3b) zur Oberseite (46) der Brühkammer erstreckt,
wobei durch Einsetzen der Brühkammer (3) in die Maschine (1) die Dichtung (16) und der Anschlussbereich (40) automatisch derart aneinander gepresst werden, dass die Verbindungsstelle zwischen Anschlussbereich (40) und Brühkammeroberteil (3b) gegen die Umgebung abgedichtet ist.

2. Maschine (1) nach Anspruch 1
**dadurch gekennzeichnet, dass**
die Dichtung (16) aus elastischem Material gebildet ist, wobei die Dichtung (16) im eingebauten Zustand durch den Anschlussbereich (40) komprimiert wird.

3. Maschine (1) nach Anspruch 2
**dadurch gekennzeichnet, dass**
der mittlere Bereich (16a) der Dichtung (16), der komprimierbar ist, zumindest teilweise auf einer Auflage (41) des Brühkammeroberteils (3b) aufliegt.

4. Maschine (1) nach mindestens einem der Ansprüche 1 bis 3
**dadurch gekennzeichnet, dass**
die Geometrie der Dichtung (16) derart gestaltet ist, dass die Dichtung (16) bei erhöhtem Innendruck in der Brühkammer (3) gegen den Anschlussbereich (40) gedrückt wird.

5. Maschine (1) nach mindestens einem der Ansprüche 1 bis 4
**dadurch gekennzeichnet, dass**
die Dichtung (16) einen um den mittleren Bereich (16a) angeordneten äußeren Bereich (16b) aufweist, der von der Innenseite (42) des Brühkammeroberteils (3b) beabstandet ist und durch einen erhöhten Druck in der Brühkammer in Richtung Innenseite drücken kann.

6. Maschine (1) nach mindestens einem der Ansprüche 1 bis 5
**dadurch gekennzeichnet, dass**
die Dichtung (16) derart ausgebildet ist, dass sie sich im wesentlichen über die gesamte obere Fläche der Innenseite (42) des Brühkammeroberteils (3b) zumindest aber über 25% der oberen Fläche der Innenseite erstreckt.

7. Maschine (1) nach mindestens einem der Ansprüche 1 bis 6
**dadurch gekennzeichnet, dass**
die Dichtung (16) einen Endbereich (16c) aufweist, der das Brühkammeroberteil (3b) mit dem Brühkammerunterteil (3a) abdichtet.

8. Maschine (1) nach mindestens einem der Ansprüche 1 bis 7
**dadurch gekennzeichnet, dass**
die Dichtung (16) einstückig ausgebildet ist.

9. Maschine (1) nach mindestens einem der Ansprüche 1 bis 8
**dadurch gekennzeichnet, dass**
die Brühkammer (3) im zusammengesetzten, verschlossenen Zustand einen Aufnahmebereich aufweist, dessen Form und Größe derart ausgebildet ist, dass ein Pad mit vorgegebener Normgröße aufnehmbar ist, wobei die Dichtung (16) einen umlaufenden Kragen (43) aufweist, der von oben und von der Seite in das Pad (23) drückt.

10. Maschine (1) nach mindestens einem der Ansprüche 1 bis 9
**dadurch gekennzeichnet, dass**
das Gehäuse (11) ein Einschubfach (22) aufweist, in das die geschlossene Brühkammer (3) als Ganzes einschiebbar ist.

11. Maschine (1) nach Anspruch 10
**dadurch gekennzeichnet, dass**
der Anschlussbereich (40) in dem Einschubfach (22) und die Oberseite des Brühkammeroberteils (3b) derart ausgebildet sind, dass der mittlere Dichtungsbereich (16a) beim Einschieben in die Einschubkammer (22) auf den Anschlussbereich (40) aufläuft.

12. Maschine (1) nach Anspruch 11
**dadurch gekennzeichnet, dass**
die Oberseite (46) des Brühkammeroberteils (3b) eine Vertiefung (26) aufweist, die zumindest von dem mittleren Bereich (40a) der Dichtung (16) nach außen in Einschubrichtung der Brühkammer (3) verläuft.

13. Maschine (1) nach Anspruch 11
**dadurch gekennzeichnet, dass**
Höhe der Brühkammer von der Einschubseite der Brühkammer (3) zum mittleren Bereich der Dichtung (16a) hin zu nimmt.

14. Maschine (1) nach mindestens einem Anspruch der Ansprüche 1 bis 13,
**dadurch gekennzeichnet, dass**
im mittleren Bereich (16a) der Dichtung ein Leitungsabschnitt (25) für das Brühwasser vorgesehen ist, über dem Brühwasser nach unten zum Brühmedium und/oder über Kanäle (47) radial nach außen verteilt wird.

15. Maschine (1) nach Anspruch 14
**dadurch gekennzeichnet, dass**
die Dichtung (16) in uneingesetztem Zustand zumindest im inneren Bereich eine konvexe Form aufweist und auf seiner Unterseite von dem Leitungsabschnitt (25) sternförmig nach außen verlaufende Nuten (49) aufweist, die sich zu den Kanälen (47) schließen, wenn die Dichtung plan in dem Brühkammeroberteil 3b eingebaut ist.

16. Maschine (1) nach mindestens einem der Ansprüche 14 und 15
**dadurch gekennzeichnet, dass**
die Dichtung (16) entnehmbar und wieder einsetzbar in der Brühkammer (3) angeordnet ist.

17. Maschine (1) nach mindestens einem der Ansprüche 1 bis 16
**dadurch gekennzeichnet, dass**
der Anschlussbereich (40) direkt am Gehäuse (11) angeformt ist oder als getrenntes Element in das Gehäuse (11) eingefügt ist.

## Claims

1. Machine (1) for the preparation of a hot drink, comprising a housing (11) and a brewing chamber (3), which can be completely removed as a whole from the housing, the housing (11) being provided with a connection region (40), through which brewing water is passed to the upper part (3b) of the brewing chamber, **characterised in that** a seal (16) is positioned in the upper part (3b) of the brewing chamber and comprises a central region (16a) which extends through an opening (50) in the upper part (3b) of the brewing chamber to the upper side (46) of the brewing chamber, the insertion of the brewing chamber (3) into the machine (1) causing the seal (16) and the connection region (40) to be pressed against one another automatically in such a way that the connecting point between the connection region (40) and the upper part (3b) of the brewing chamber is sealed off from the environment.

2. Machine (1) according to claim 1, **characterised in that** the seal (16) is formed from resilient material, the seal (16) in the fitted state being compressed by the connection region (40).

3. Machine (1) according to claim 2, **characterised in that** the central region (16a) of the seal (16) is compressible and is in contact, at least in part, with a support (41) of the upper part (3b) of the brewing chamber.

4. Machine (1) according to at least one of claims 1 to 3, **characterised in that** the shape of the seal (16) is configured in such a way that the seal (16) is pressed against the connection region (40) with increased internal pressure in the brewing chamber (3).

5. Machine (1) according to at least one of claims 1 to 4, **characterised in that** the seal (16) has an external region (16b) surrounding a central region (16a), the external region being spaced from the inner side (42) of the upper part (3b) of the brewing chamber and being capable of being pressed in the direction of the inner side by an increased pressure in the brewing chamber.

6. Machine (1) according to at least one of claims 1 to 5, **characterised in that** the seal (16) is formed in such a way that it extends substantially over the entire upper surface of the inner side (42) of the upper part (3b) of the brewing chamber but extends over at least 25 % of the upper surface of the inner side.

7. Machine (1) according to at least one of claims 1 to 6, **characterised in that** the seal (16) has an end region (16c) which seals the upper part (3b) of the brewing chamber with the lower part (3a) of the brewing chamber.

8. Machine (1) according to at least one of claims 1 to 7, **characterised in that** the seal (16) is formed in one piece.

9. Machine (1) according to at least one of claims 1 to 8, **characterised in that** in the assembled, locked state, the brewing chamber (3) has a receptacle region, the shape and size of which are configured in such a way that a pad of a predetermined standard size can be accommodated, the seal (16) having a peripheral collar (43), which presses into the pad (23) from above and from the side.

10. Machine (1) according to at least one of claims 1 to 9, **characterised in that** the housing (11) has a drawer compartment (22), into which the closed brewing chamber (3) can be inserted as a complete unit.

11. Machine (1) according to claim 10, **characterised in that** the connection region (40) in the drawer compartment (22) and the upper side of the upper part (3b) of the brewing chamber are formed in such a way that the central sealing region (16a) runs onto the connection region (40) upon being inserted into the drawer chamber (22).

12. Machine (1) according to claim 11, **characterised in that** the upper side (46) of the upper part (3b) of the brewing chamber has an indentation (26), which extends at least out from the central region (40a) of the seal (16) in the insertion direction of the brewing chamber (3).

13. Machine (1) according to claim 11, **characterised in that** the height of the brewing chamber increases from the insertion side of the brewing chamber (3) towards the central region of the seal (16a).

14. Machine (1) according to at least one of claims 1 to 13, **characterised in that** in the central region (16a) of the seal, a pipe portion (25) for the brewing water is provided, through which pipe portion brewing water is distributed downwards to the brewing medium and/or radially outwards via channels (47).

15. Machine (1) according to claim 14, **characterised in that** the seal (16) has a convex shape at least in the inner region in the non-fitted state and has grooves (49) on its underside extending outwards from the pipe portion (25) in a star shape, which grooves (49) close to form channels (47) when the seal is fitted flat in the upper part (3b) of the brewing chamber.

16. Machine (1) according to at least one of claims 14 and 15, **characterised in that** the seal (16) is arranged in the brewing chamber (3) in such a way that it can be removed and reinserted.

17. Machine (1) according to at least one of claims 1 to 16, **characterised in that** the connection region (40) is moulded directly on the housing (11) or inserted into the housing (11) as a separate element.

## Revendications

1. Machine (1) destinée à la préparation d'une boisson chaude, comportant un carter (11), ainsi qu'une chambre d'infusion (3), qui peut être retirée complètement sous la forme d'un tout hors du carter,
ledit carter (11) étant muni d'une zone de raccordement (40), à travers laquelle l'eau bouillante est guidée vers la partie supérieure (3b) de la chambre d'infusion,
**caractérisée en ce que**
dans la partie supérieure (3b) de la chambre d'infusion est posée une garniture d'étanchéité (16), qui comporte une zone centrale (16a), qui s'étend à travers une ouverture (50) dans la partie supérieure (3b) de la chambre d'infusion vers la face supérieure (46) de la chambre d'infusion,
dans laquelle, sous l'effet de la mise en place de la chambre d'infusion (3) dans la machine (1), la garniture d'étanchéité (16) et la zone de raccordement (40) sont pressées automatiquement l'une contre l'autre, de telle sorte que la zone de jonction entre la zone de raccordement (40) et la partie supérieure (3b) de la chambre d'infusion est rendue étanche par rapport à l'environnement.

2. Machine (1) selon la revendication 1,
**caractérisée en ce que** la garniture d'étanchéité (16) est réalisée dans un matériau élastique, ladite garniture d'étanchéité (16), dans la position insérée, étant comprimée par la zone de raccordement (40).

3. Machine (1) selon la revendication 2,
**caractérisée en ce que** la zone centrale (16a) de la garniture d'étanchéité (16), laquelle est compressible, est en appui au moins en partie sur un support (41) de la partie supérieure (3b) de la chambre d'infusion.

4. Machine (1) selon au moins l'une quelconque des revendications 1 à 3, **caractérisée en ce que** la géométrie de la garniture d'étanchéité (16) est configurée de telle sorte que la garniture d'étanchéité (16) est poussée contre la zone de raccordement (40) sous l'effet de l'augmentation de la pression intérieure dans la chambre d'infusion (3).

5. Machine (1) selon au moins l'une quelconque des revendications 1 à 4, **caractérisée en ce que** la garniture d'étanchéité (16) comporte une zone extérieure (16b), qui est disposée autour de la zone centrale (16a) et qui est située à distance de la face intérieure (42) de la partie supérieure (3b) de la chambre d'infusion et peut être poussée vers ladite face intérieure sous l'effet d'une augmentation de la pression dans la chambre d'infusion.

6. Machine (1) selon au moins l'une quelconque des revendications 1 à 5, **caractérisée en ce que** la garniture d'étanchéité (16) est configurée de telle sorte qu'elle s'étend sensiblement sur toute la surface supérieure de la face intérieure (42) de la partie supérieure (3b) de la chambre d'infusion, mais au moins sur 25 % de la surface supérieure de ladite face intérieure.

7. Machine (1) selon au moins l'une quelconque des revendications 1 à 6, **caractérisée en ce que** la garniture d'étanchéité (16) comporte une zone d'extrémité (16c), qui assure l'étanchéité de la partie supérieure (3b) de la chambre d'infusion par rapport à la partie inférieure (3a) de la chambre d'infusion.

8. Machine (1) selon au moins l'une quelconque des revendications 1 à 7, **caractérisée en ce que** la garniture d'étanchéité (16) est réalisée d'un seul tenant.

9. Machine (1) selon au moins l'une quelconque des revendications 1 à 8, **caractérisée en ce que**, dans la position assemblée fermée, la chambre d'infusion (3) comporte une zone de réception, dont la forme et la dimension sont conçues de manière à pouvoir recevoir un coussinet à dimension standard prédéfinie, ladite garniture d'étanchéité (16) comportant une collerette (43) périphérique, qui pousse depuis le haut et depuis le côté dans le coussinet (23).

10. Machine (1) selon au moins l'une quelconque des revendications 1 à 9, **caractérisée en ce que** le carter (11) comporte un compartiment de réception (22),
dans lequel la chambre d'infusion (3) fermée peut être insérée en totalité.

11. Machine (1) selon la revendication 10,
**caractérisée en ce que** la zone de raccordement (40) dans le compartiment de réception (22) et la face supérieure de la partie supérieure (3b) de la chambre d'infusion sont conçues de telle sorte que la zone d'étanchéité centrale (16a) est amenée vers la zone de raccordement (40) lors de l'introduction dans le compartiment de réception (22).

12. Machine (1) selon la revendication 11,
**caractérisée en ce que** la face supérieure (46) de la partie supérieure (3b) de la chambre d'infusion comporte un creux (26), qui s'étend au moins depuis la zone centrale (40a) de la garniture d'étanchéité (16) vers l'extérieur dans la direction d'introduction de la chambre d'infusion (3).

13. Machine (1) selon la revendication 11,
**caractérisée en ce que** la hauteur de la chambre d'infusion augmente depuis le côté d'introduction de la chambre d'infusion (3) vers la zone centrale (16a) de la garniture d'étanchéité.

14. Machine (1) selon au moins l'une quelconque des revendications 1 à 13, **caractérisée en ce que** dans la zone centrale (16a) de la garniture d'étanchéité est prévu un tronçon de conduite (25) pour l'eau bouillante, par l'intermédiaire duquel l'eau bouillante est distribuée vers le bas vers le produit à infuser et/ou est distribuée radialement vers l'extérieur via des canaux (47).

15. Machine (1) selon la revendication 14,
**caractérisée en ce que** la garniture d'étanchéité (16), dans la position non introduite, a une forme convexe au moins dans la zone intérieure et comporte, sur son côté inférieur, des rainures (49), qui s'étendent vers l'extérieur en forme d'étoile à partir du tronçon de conduite (25) et qui se ferment vers les canaux (47) lorsque la garniture d'étanchéité est insérée de manière plane dans la partie supérieure (3b) de la chambre d'infusion.

16. Machine (1) selon au moins une des revendications 14 et 15, **caractérisée en ce que** la garniture d'étanchéité (16) est disposée de manière à pouvoir être retirée et être introduite à nouveau dans la chambre d'infusion (3).

17. Machine (1) selon au moins l'une quelconque des revendications 1 à 16, **caractérisée en ce que** la zone de raccordement (40) est formée directement sur le carter (11) ou est insérée dans le carter (11) sous la forme d'un élément séparé.
